# EUROPEAN PATENT APPLICATION

(11) **EP 3 503 667 A1**
(43) Date of publication of application: **26.06.2019**
(21) Application number: 17840767.2
(22) Date of filing: 18.04.2017
(51) Int. Cl.: H04W 76/10, H04W 48/00

(54) **SIGNAL ACQUISITION METHOD AND APPARATUS**

(30) Priority: 17.08.2016 CN 201610685194
(71) Applicant: ZTE Corporation, Shenzhen, Guangdong 518057 (CN)
(72) Inventor: XIN, Yang, Shenzhen Guangdong 518057 (CN)
(74) Representative: Petit, Maxime
(86) International application number: PCT/CN2017/080832
(87) International publication number: WO 2018/032791

(57) **Abstract**

Disclosed by the embodiments of the present application is a signal acquisition method, the method comprising: acquiring a quality parameter value of a signal that is connectable to a terminal; and analyzing the quality parameter value of the signal that is connectable to the terminal and determining a target signal that is to be connected by the terminal. Also disclosed by the embodiments of the present application is a signal acquisition device.

## Description

### TECHNICAL FIELD

The present disclosure relates to signal acquisition technology in the field of communication, and in particular, relates to a signal acquisition method and device.

### BACKGROUND

With rapid development of internet technology, wireless networks have been widely applied in various industries, tremendously changing the way people live, work, entertain, and communicate. Accordingly, terminal apparatuses of wireless access points, such as a router applied at a fixed place like an office, a house, etc., are continuously upgraded. At the moment, Wi-Fi technology has gradually transited from single frequency signal of 2.4G to dual frequency signals of 2.4G and 5G. The 2.4G signal has an advantage of strong penetration capability, but has disadvantages of interference sources being too many, slow speed, and high power consumption; the 5G signal has advantages of less interference sources, fast speed, and low power consumption, but has a disadvantage of poor penetration capability. Currently provided Wi-Fi connection technologies are mainly described as the following: a smart mobile terminal, such as a mobile phone, may automatically connect to a service set identifier (SSID) which was connected previously; or when the 2.4G signal and the 5G signal are both provided, the smart mobile terminal may calculate, before connection, signal strengths of the 2.4G signal and the 5G signal by employing a certain algorithm and select a suitable signal for connection.

However, a household is generally equipped with only one wireless access terminal, and there may have a change in position of a smart mobile terminal when the user is using the smart mobile terminal. In this case, since an automatic connection will be performed only once before the smart mobile terminal shuts down or leaves the Wi-Fi signal coverage in the existing technology and it is unable to switch between connectable Wi-Fi signals automatically according to their strengths at the position of the smart mobile terminal, the user needs to manually switch between 2.4G and 5G signals that are connectable to the smart mobile terminal even if the user has adequate knowledge on the 2.4G and 5G signals, resulting in an unpleasant user experience.

### SUMMARY

In order to solve the above technical problem, embodiments of the present disclosure provide a signal acquisition method and device, which solve the problem in some cases that a terminal cannot automatically select a signal for connection according to signal qualities, and enable a terminal to automatically select and connect to a Wi-Fi signal with a better signal quality, improving user experience.

For the above-described purpose, technical solutions of embodiments of the present disclosure are realized as follows.

The present disclosure provides a signal acquisition method, including: acquiring a quality parameter value of a signal that is connectable to a terminal; and analyzing the quality parameter value of the signal that is connectable to the terminal and determining a target signal that is to be connected by the terminal.

Optionally, the acquiring the quality parameter value of the signal that is connectable to the terminal includes: acquiring a first parameter of each of signals that are connectable to the terminal, wherein the first parameter includes at least one of: a reception power, a response time, and a transmission rate; and obtaining a quality parameter value of each of the signals according to the first parameter of each of the signals.

Optionally, the obtaining the quality parameter value of each of the signals according to the first parameter of each of the signals includes: setting a weight coefficient for the first parameter of each of the signals; and performing weighted calculation on the first parameter of each of the signals based on the weight coefficient for the first parameter to obtain the quality parameter value of each of the signals.

Optionally, the analyzing the quality parameter value of the signal that is connectable to the terminal and determining the target signal that is to be connected by the terminal includes: comparing the quality parameter value of each of the signals with one another; and acquiring a signal having a highest quality parameter value among quality parameter values of the signals, and setting the signal having the highest quality parameter value as the target signal.

Optionally, the method further includes: monitoring a quality parameter value of a currently connected signal of the terminal; determining, in response to a variation in the quality parameter value of the currently connected signal within a first preset time period being greater than a first threshold and a duration in the first preset time period, during which the quality parameter value is a second threshold, being greater than a second preset time period, whether a current quality parameter value of the currently connected signal of the terminal is zero; and acquiring, in response to the current quality parameter value of the currently connected signal of the terminal being zero, a signal having a highest quality parameter value among all signals that are connectable to the terminal except the currently connected signal, and setting the signal having the highest quality parameter value among all signals that are connectable to the terminal except the currently connected signal as the target signal.

Optionally, the method further includes: acquiring, in response to the current quality parameter value of the currently connected signal of the terminal being not zero, an average download speed of the terminal over a third preset time period, and summing up time periods within the third preset time period, during each of which a download speed of the terminal is greater than a first preset speed, to obtain a total time period; determining whether the average download speed is greater than a second preset download speed and whether a ratio of the total time period and the third preset time period is greater than a preset ratio; and acquiring, in response to the average download speed being smaller than or equal to the second preset download speed and the ratio of the total time period and the third preset time period being smaller than or equal to the preset ratio, a signal having a highest quality parameter value among all signals that are connectable to the terminal when the first preset time period starts, and setting, when the first preset time period starts, the signal having the highest quality parameter value among all signals that are connectable to the terminal as the target signal.

The present disclosure further provides a signal acquisition device, including an acquisition unit and a first processing unit, wherein: the acquisition unit is configured to acquire a quality parameter value of a signal that is connectable to a terminal; and the first processing unit is configured to analyze the quality parameter value of the signal that is connectable to the terminal and determine a target signal that is to be connected by the terminal.

Optionally, the acquisition unit includes an acquisition module and a first processing module, wherein: the acquisition module is configured to acquire a first parameter of each of signals that are connectable to the terminal, wherein the first parameter includes at least one of: a reception power, a response time, and a transmission rate; and the first processing module is configured to obtain a quality parameter value of each of the signals according to the first parameter of each of the signals.

Optionally, the first processing module is configured to: set a weight coefficient for the first parameter of each of the signals; and perform weighted calculation on the first parameter of each of the signals based on the weight coefficient for the first parameter to obtain the quality parameter value of each of the signals.

Optionally, the first processing unit includes a comparison module and a second processing module, wherein the comparison module is configured to compare quality parameter value of each of the signals with one another; and the second processing module is configured to acquire a signal having a highest quality parameter value among quality parameter values of the signals, and set the signal having the highest quality parameter value as the target signal.

Optionally, the device further includes a monitoring unit, a first determination unit and a second processing unit, wherein: the monitoring unit is configured to monitor a quality parameter value of a currently connected signal of the terminal; the first determination unit is configured to determine, in response to a variation in the quality parameter value of the currently connected signal within a first preset time period being greater than a first threshold and a duration in the first preset time period, during which the quality parameter value is a second threshold, being greater than a second preset time period, whether a current quality parameter value of the currently connected signal of the terminal is zero; and the second processing unit is configured to acquire, in response to the current quality parameter value of the currently connected signal of the terminal being zero, a signal having a highest quality parameter value among all signals that are connectable to the terminal except the currently connected signal, and set the signal having the highest quality parameter value among all signals that are connectable to the terminal except the currently connected signal as the target signal.

Optionally, the device further includes a third processing unit, a second determination unit and a fourth processing unit, wherein: the third processing unit is configured to acquire, in response to the current quality parameter value of the currently connected signal of the terminal being not zero, an average download speed of the terminal over a third preset time period, and sum up time periods within the third preset time period, during each of which the download speed of the terminal is greater than a first preset speed, to obtain a total time period; the second determination unit is configured to determine whether the average download speed is greater than a second preset download speed and whether a ratio of the total time period and the third preset time period is greater than a preset ratio; and the fourth processing unit is configured to acquire, in response to the average download speed being smaller than or equal to the second preset download speed and the ratio of the total time period and the third preset time period being smaller than or equal to the preset ratio, a signal having a highest quality parameter value among all signals that are connectable to the terminal when the first preset time period starts, and set, when the first preset time period starts, the signal having the highest quality parameter value among all signals that are connectable to the terminal as the target signal.

By utilizing the signal acquisition method and device according to the embodiments of the present disclosure, a quality parameter value of a signal that is connectable to a terminal can be acquired, and then the quality parameter value of the signal that is connectable to the terminal can be analyzed and a target signal that is to be connected by the terminal can be determined. As such, based on relationships between quality parameter values of connectable Wi-Fi signals, the terminal can directly select and connect to a Wi-Fi signal having a better quality parameter value among the Wi-Fi signals when the terminal needs to connect to a Wi-Fi signal, thereby solving the problem in some cases that a terminal cannot automatically select a signal for connection according to signal qualities, enabling a terminal to automatically select and connect to a Wi-Fi signal with a better signal quality, and improving interaction capability between the user and the terminal.

### BRIEF DESCRIPTION OF THE DRAWINGS

Fig. 1 is a schematic flow chart of a signal acquisition method according to an embodiment of the present disclosure;
Fig. 2 is a schematic flow chart of another signal acquisition method according to an embodiment of the present disclosure;
Fig. 3 is a schematic flow chart of yet another signal acquisition method according to an embodiment of the present disclosure;
Fig. 4 is a schematic diagram of a structure of a signal acquisition device according to an embodiment of the present disclosure;
Fig. 5 is a schematic diagram of a structure of another signal acquisition device according to an embodiment of the present disclosure;
Fig. 6 is a schematic diagram of a structure of yet another signal acquisition device according to an embodiment of the present disclosure;
Fig. 7 is a schematic diagram of a structure of a signal acquisition device according to another embodiment of the present disclosure; and
Fig. 8 is a schematic diagram of a structure of another signal acquisition device according to another embodiment of the present disclosure.

### DETAILED DESCRIPTION

Technical solutions of embodiments of the present disclosure will be clearly and thoroughly described in conjunction with accompanying drawings of embodiments of the present disclosure.

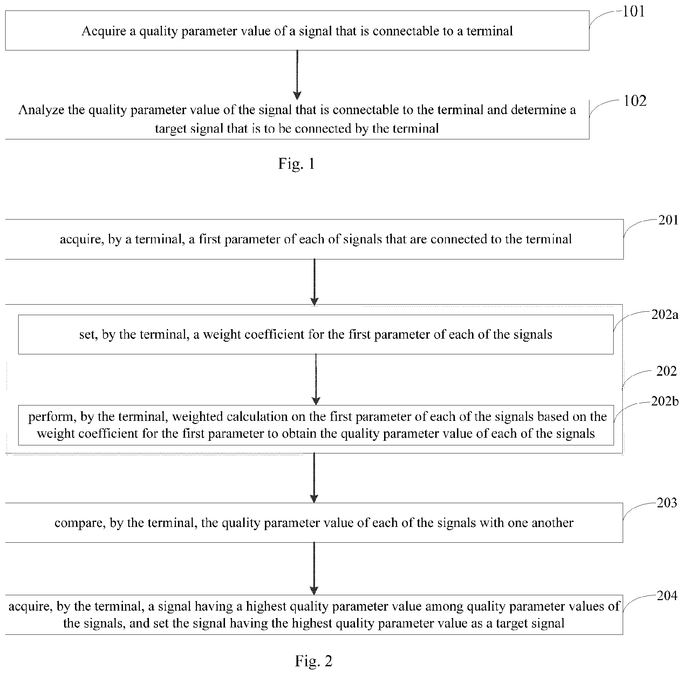

An embodiment of the present disclosure provides a signal acquisition method. Referring to Fig. 1, the method includes the following steps 101 and 102.

At step 101, a quality parameter value of a signal that is connectable to a terminal is acquired.

The step 101 in which the quality parameter value of the signal that is connectable to the terminal is acquired may be implemented by the terminal. The connectable signal may be a Wi-Fi signal, and the quality parameter value may be determined by a reception power, a response time, and/or transmission rate of the Wi-Fi signal which have larger influence on the Wi-Fi signal. The Wi-Fi signal may include 2.4G and/or 5G signal, for example, the Wi-Fi signal that is connectable to the terminal may be at least two 2.4G signals, at least two 5G signals, or at least one 2.4G signal and at least one 5G signal, and the terminal may be a mobile terminal such as a smart phone.

At step 102, the quality parameter value of the signal that is connectable to the terminal is analyzed and a target signal that is to be connected by the terminal is determined.

The step 102 in which the quality parameter value of the signal that is connectable to the terminal is analyzed and a target signal that is to be connected by the terminal is determined may be implemented by the terminal. The terminal may analyze and compare quality parameter values of connectable Wi-Fi signals, and select the Wi-Fi signal having the highest quality parameter value among all the connectable Wi-Fi signals to connect thereto.

By utilizing the signal acquisition method according to the embodiments of the present disclosure, a quality parameter value of a signal that is connectable to a terminal can be acquired, and then the quality parameter value of the signal that is connectable to the terminal can be analyzed and a target signal that is to be connected by the terminal can be determined. As such, based on relationships between quality parameter values of connectable Wi-Fi signals, the terminal can directly select and connect to a Wi-Fi signal having a better quality parameter value among the Wi-Fi signals when the terminal needs to connect to a Wi-Fi signal, thereby solving the problem in some cases that a terminal cannot automatically select a signal for connection according to signal qualities, enabling a terminal to automatically select and connect to a Wi-Fi signal with a better signal quality, and improving interaction capability between a user and a terminal.

An embodiment of the present disclosure provides a signal acquisition method. Referring to Fig. 2, the method includes the following steps 201 to 204.

At step 201, a terminal acquires a first parameter of each of signals that are connectable to the terminal, wherein the first parameter includes at least one of: a reception power, a response time, and a transmission rate.

A user may determine which parameter(s) is (are) selected to obtain a quality parameter value of a Wi-Fi signal according to a specific application scenario. For example, the user may select any one of the reception power, the response time and the transmission rate as the first parameter for obtaining the quality parameter value of the Wi-Fi signal, or may select any two of the reception power, the response time and the transmission rate as the parameters for obtaining the quality parameter value of the Wi-Fi signal, or may select all of the reception power, the response time and the transmission rate as the parameters for obtaining the quality parameter value of the Wi-Fi signal.

At step 202, the terminal obtains a quality parameter value of each of the signals according to the first parameter of each of the signals.

In a same manner as in the step 201, in which a user may determine which parameter(s) is (are) selected to obtain a quality parameter value of a Wi-Fi signal according to a specific application scenario, the quality parameter value of the Wi-Fi signal may be obtained according to at least one parameter value, which is selected as the first parameter, among the reception power, the response time, and the transmission rate of the connectable Wi-Fi signal. The reception power of the connectable Wi-Fi signal may be obtained from direct reading by the terminal; the obtained reception power P of the Wi-Fi signal has a variation range of 0dBm ∼ -100dBm, and a parameter value P' of the reception power of the Wi-Fi signal may be calculated and determined by an equation P'=P+100. The response time of the Wi-Fi signal that is connectable to the terminal may be determined by recording the time intervals between a time point at which each of multiple loopback data packets is sent by the terminal via the Wi-Fi signal to a wireless access point such as a router and a time point at which the loopback data packet is received, and then computing an average time thereof. Since the time factor is important for the response time, a size of the loopback data packet may be as small as possible; the response time of the Wi-Fi signal obtained by the terminal is usually 10ms or less, and if the Wi-Fi signal is weak, the response time is about 10ms ∼ 50ms. A parameter value T' of the response time T of the Wi-Fi signal may be obtained by an equation T'=100-T, and when the response time T of the Wi-Fi signal is greater than 100ms, the parameter value T' of the response time T of the Wi-Fi signal may be simply defined as 0. The transmission rate of the Wi-Fi signal that is connectable to the terminal may be obtained by acquiring a number *n* of data packets each having a size M sent by a wireless access point such as a router and received by the terminal within a certain time period t, and calculating the transmission rate using an equation V=n^{∗}M/t. Since data amount factor is important for the transmission rate, the size M of the data packet may be as big as possible; after that, a parameter value V' of the transmission rate V may be obtained by an equation V'=[V/10], that is, the parameter value V' of the transmission rate may be obtained by rounding a ratio of the transmission rate V and 10 to an integer, wherein a unit of the transmission rate V is KB/s. When the transmission rate V of the Wi-Fi signal is greater than 1000KB/s, the parameter value V' of the transmission rate V of the Wi-Fi signal may be simply defined as 100.

Exemplarily, the parameter value of the reception power of the Wi-Fi signal may be obtained as follows: the reception power P of the Wi-Fi signal has a variation range of 0dBm ∼ -100dBm, the reception power of the Wi-Fi signal gradually weakens from 0dBm to -100dBm, when the reception power of the Wi-Fi signal is 0dBm, P'=P+100=100+0=100, the parameter value of the reception power of the Wi-Fi signal is 100; or, when the reception power of the Wi-Fi signal is -50dBm, P'=P+100=100+(-50)=50, the parameter value of the reception power of the Wi-Fi signal is 50; or, when the reception power of the Wi-Fi signal is -100dBm, P'=P+100=100+(-100)=0, the parameter value of the reception power of the Wi-Fi signal is 0.

The parameter value of the response time of the Wi-Fi signal may be obtained as follows: assuming that the terminal, by employing the Wi-Fi signal, sends 10 loopback data packets to a wireless access point such as a router and receives the loopback data packets, time taken from the sending to the reception of each of the loopback data packets is statistically measured, as shown in Table 1. An average response time of the 10 statistical time of the Wi-Fi signal is calculated as T=(3+2+5+7+4+1+4+6+3+2)/10=3.7ms, at this time, the parameter value of the response time of the Wi-Fi signal is T'=100-T=100-3.7=96.3.

**Table 1**

| Data packet | 1 | 2 | 3 | 4 | 5 | 6 | 7 | 8 | 9 | 10 |
|---|---|---|---|---|---|---|---|---|---|---|
| Loopback time/ms | 3 | 2 | 5 | 7 | 4 | 1 | 4 | 6 | 3 | 2 |

The parameter value of the transmission rate of the Wi-Fi signal may be obtained as follows: starting from a time point Ta=t, the router sends data packets each having a size of 5KB to the terminal, the router stops sending and the terminal stops receiving the data packets at a time point Tb=t+10ms, the terminal has received a total of 10 data packets each having a size of 5KB within the time period (Tb-Ta=10ms).The transmission rate of the Wi-Fi signal is V=10^{∗}5KB/(Tb-Ta)=5000KB/s=5MB/s, and since 5MB/s>1MB/s, the parameter value of the transmission rate of the Wi-Fi signal is V'=100.

It is to be noted that the step 202 of obtaining a quality parameter value of each of the signals according to the first parameter of each of the signals may be implemented by the following steps 202a and 202b.

At step 202a, the terminal sets a weight coefficient for the first parameter of each of the signals.

At step 202b, the terminal performs weighted calculation on the first parameter of each of the signals based on the weight coefficient for the first parameter to obtain the quality parameter value of each of the signals.

A user may set the reception power, the response time and/or the transmission rate of the Wi-Fi signal according to a specific application scenario, and the weight coefficient may be set according to a corresponding service to which the Wi-Fi signal is applied (applied service) in the specific application scenario. For example, according to different service to which the Wi-Fi signal is applied, the weight coefficient α for the reception power, the weight coefficient β for the response time, and the weight coefficient γ for the transmission rate of the Wi-Fi signal may have different values, wherein α+β+γ=1. Exemplarily, because the reception power can directly reflect the quality of the Wi-Fi signal, the reception power may be set as a major parameter primarily deciding the quality of the Wi-Fi signal; when browsing web pages, the user may consider that the response time of the Wi-Fi signal is important, in which case α=0.5, β=0.4, and γ=0.1 may be set; when watching a video, the user may consider that the download speed is relatively important, in which case α=0.5, β=0.1, and γ=0.4 may be set; when downloading a file, the user may no longer care about the response time, in which case α=0.5, β=0, γ=0.5 may be set; finally, the quality parameter value of the Wi-Fi signal may be calculated according to an equation S=αP'+βT'+γV'.

At step 203, the terminal compares the quality parameter value of each of the signals with one another.

At step 204, the terminal acquires a signal having a highest quality parameter value among quality parameter values of the signals, and sets the signal having the highest quality parameter value as a target signal.

Description is given by taking an example where a 2.4G signal and a 5G signal are connectable to a terminal, and the quality parameter value of the Wi-Fi signal is determined by three parameters: the reception power, the response time and the transmission rate. In the example, if the applied service for the user is a video playback, the terminal performs weighted summation to obtain the quality parameter value of the 2.4G signal according to the obtained reception power, response time and transmission rate of the 2.4G signal and weight coefficients, which are set for the applied service of the video playback, corresponding to parameters of the 2.4G signal, and at the same time performs weighted summation to obtain the quality parameter value of the 5G signal according to the obtained reception power, response time and transmission rate of the 5G signal and weight coefficients, which are set for the applied service of the video playback, corresponding to parameters of the 5G signal, and then compares the quality parameter values of the 2.4G signal and the 5G signal. If the quality parameter value of the 2.4G signal is greater than the quality parameter value of the 5G signal, then the 2.4G signal is set as the target signal, that is, the terminal selects and connects to the 2.4G signal; if the quality parameter value of the 2.4G signal is small than or equal to the quality parameter value of the 5G signal, then the 5G signal is set as the target signal, that is, the terminal selects and connects to the 5G signal.

It is to be noted that, as for interpretation of steps or concepts of the present embodiment same as those of other embodiments, one may refer to description of other embodiments, which is not repeated herein.

By utilizing the signal acquisition method according to the embodiments of the present disclosure, a quality parameter value of a signal that is connectable to a terminal can be acquired, and then the quality parameter value of the signal that is connectable to the terminal can be analyzed and a target signal that is to be connected by the terminal can be determined. As such, based on relationships between quality parameter values of connectable Wi-Fi signals, the terminal can directly select and connect to a Wi-Fi signal having a better quality parameter value among the Wi-Fi signals when the terminal needs to connect to a Wi-Fi signal, thereby solving the problem in some cases that a terminal cannot automatically select a signal for connection according to signal qualities, enabling a terminal to automatically select and connect to a Wi-Fi signal with a better signal quality, and improving interaction capability between the user and the terminal.

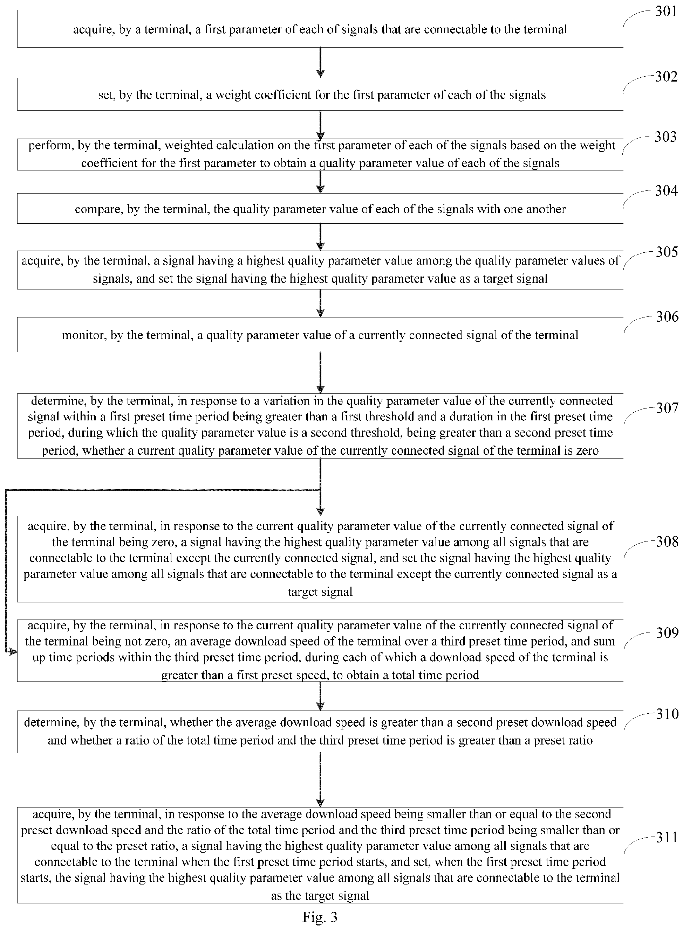

An embodiment of the present disclosure provides a signal acquisition method. Referring to Fig. 3, the method includes the following steps 301 to 311.

At step 301, a terminal acquires a first parameter of each of signals that are connectable to the terminal.

At step 302, the terminal sets a weight coefficient for the first parameter of each of the signals.

At step 303, the terminal performs weighted calculation on the first parameter of each of the signals based on the weight coefficient for the first parameter to obtain a quality parameter value of each of the signals.

At step 304, the terminal compares the quality parameter value of each of the signals with one another.

At step 305, the terminal acquires a signal having a highest quality parameter value among the quality parameter values of signals, and sets the signal having the highest quality parameter value as a target signal.

At step 306, the terminal monitors a quality parameter value of a currently connected signal of the terminal.

The terminal monitors in real time the changing of the currently connected signal, and records and obtains the quality parameter value of the currently connected signal of the terminal.

At step 307, if a variation in the quality parameter value of the currently connected signal within a first preset time period is greater than a first threshold and a duration in the first preset time period, during which the quality parameter value is a second threshold, is greater than a second preset time period, then the terminal determines whether a current quality parameter value of the currently connected signal of the terminal is zero.

If the variation in the quality parameter value of the currently connected Wi-Fi signal within the first preset time period is smaller than or equal to the first threshold, and the duration in the first preset time period, during which the quality parameter value is the second threshold, is smaller than or equal to the second preset time period, it means that the quality of the currently connected Wi-Fi signal is good enough and switching is not needed, in this case, the terminal continues to monitor the quality parameter value of the Wi-Fi signal. Here, the first preset time period is set according to the service application selected by the user, and the range of the second preset time period falls within the range of the first preset time period. When the terminal is unable to establish a connection with some connectable Wi-Fi signal, the quality parameter value of this Wi-Fi signal may be set to 0 directly. Exemplarily, a router may simultaneously provide a 2.4G signal and a 5G signal, and assuming that the currently connected Wi-Fi signal of the terminal is the 2.4G signal, in this case, if an increased value of the quality parameter value of the 2.4G signal that is increased within the first preset time period is greater than the first threshold, and the duration in the first preset time period, during which the quality parameter value is the second threshold, is greater than the second preset time period, the terminal may directly switch to the 5G signal and monitor in real time the quality parameter value of the connected 5G signal; if a decreased value of the quality parameter value of the 2.4G signal that is decreased within the first preset time period is greater than the first threshold, and the duration in the first preset time period, during which the quality parameter value is the second threshold, is greater than the second preset time period, the terminal determines whether the quality parameter value of the currently connected 2.4G signal is zero. Here, the first threshold and the second threshold may be empirical values obtained by testing users' online experiences, and in an embodiment, the second threshold may be determined according to the quality parameter value of Wi-Fi signal connected within the first preset time period, or may be the quality parameter value of the Wi-Fi signal connected when the first preset time period starts.

After the step 307 in which whether the current quality parameter value of the currently connected signal of the terminal is zero is determined, step 308 or steps 309 to 311 may be selected and performed, wherein if the current quality parameter value of the currently connected signal of the terminal is zero, then the step 308 is performed; if the current quality parameter value of the currently connected signal of the terminal is not zero, then the steps 309-311 are performed.

At step 308, if the current quality parameter value of the currently connected signal of the terminal is zero, then the terminal acquires a signal having the highest quality parameter value among all signals that are connectable to the terminal except the currently connected signal, and sets the signal having the highest quality parameter value among all signals that are connectable to the terminal except the currently connected signal as a target signal.

If the current quality parameter value of the currently connected Wi-Fi signal of the terminal is zero, then the terminal acquires quality parameter values of connectable Wi-Fi signals except the currently connected Wi-Fi signal and compares quality parameter values of these Wi-Fi signals to obtain a Wi-Fi signal having the highest quality parameter value among these Wi-Fi signals as the target signal. The terminal switches and connects to the target signal having the highest quality parameter value among other connectable Wi-Fi signals, to replace the currently connected Wi-Fi signal.

At step 309, if the current quality parameter value of the currently connected signal of the terminal is not zero, then the terminal acquires an average download speed of the terminal over a third preset time period, and sums up time periods within the third preset time period, during each of which the download speed of the terminal is greater than a first preset speed, to obtain a total time period.

If the current quality parameter value of the currently connected signal of the terminal is not zero, then the terminal may acquire records of download speed in the past third preset time period, sums up and averages these download speed records to obtain the average download speed; sums up time periods, during which the download speed of the terminal is greater than the first preset speed, from the download speed records acquired within the third preset time period to obtain the total time period.

At step 310, the terminal determines whether the average download speed is greater than a second preset download speed and whether a ratio of the total time period and the third preset time period is greater than a preset ratio.

At step 311, if the average download speed is smaller than or equal to the second preset download speed and the ratio of the total time period and the third preset time period is smaller than or equal to the preset ratio, then the terminal acquires, when the first preset time period starts, a signal having the highest quality parameter value among all signals that are connectable to the terminal, and sets, when the first preset time period starts, the signal having the highest quality parameter value among all signals that are connectable to the terminal as the target signal.

Further, if the average download speed is greater than the second preset download speed and the ratio of the total time period and the third preset time period is greater than the preset ratio, then the terminal does not need to switch the currently connected signal, and continues to monitor the quality parameter value of the currently connected signal.

It is to be noted that, as for interpretation of steps or concepts of the present embodiment same as those of other embodiments, one may refer to description of other embodiments, which is not repeated herein.

By utilizing the signal acquisition method according to the embodiments of the present disclosure, a quality parameter value of a signal that is connectable to a terminal can be acquired, and then the quality parameter value of the signal that is connectable to the terminal can be analyzed and a target signal that is to be connected by the terminal can be determined. As such, based on relationships between quality parameter values of connectable Wi-Fi signals, the terminal can directly select and connect to a Wi-Fi signal having a better quality parameter value among the Wi-Fi signals when the terminal needs to connect to a Wi-Fi signal, thereby solving the problem in some cases that a terminal cannot automatically select a signal for connection according to signal qualities, enabling a terminal to automatically select and connect to a Wi-Fi signal with a better signal quality, and improving interaction capability between the user and the terminal. Further, when quality of the Wi-Fi signal already connected to the terminal changes, the terminal can switch to a Wi-Fi signal with a better signal quality, thereby ensuring user's online experience.

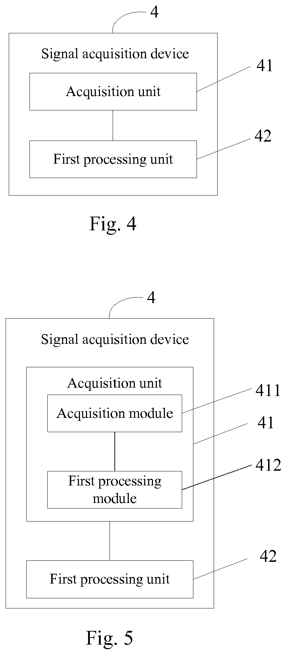

An embodiment of the present disclosure provides a signal acquisition device 4, applicable to one of the signal acquisition methods provided by embodiments corresponding to Figs. 1-3. Referring to Fig. 4, the device includes an acquisition unit 41 and a first processing unit 42.

The acquisition unit 41 is configured to acquire a quality parameter value of a signal that is connectable to a terminal.

The first processing unit 42 is configured to analyze the quality parameter value of the signal that is connectable to the terminal and determine a target signal that is to be connected by the terminal.

The signal acquisition device according to the embodiments of the present disclosure can acquire a quality parameter value of a signal that is connectable to a terminal, and then analyze the quality parameter value of the signal that is connectable to the terminal and determine a target signal that is to be connected by the terminal. As such, based on relationships between quality parameter values of connectable Wi-Fi signals, the terminal can directly select and connect to a Wi-Fi signal having a better quality parameter value among the Wi-Fi signals when the terminal needs to connect to a Wi-Fi signal, thereby solving the problem in some cases that a terminal cannot automatically select a signal for connection according to signal qualities, enabling a terminal to automatically select and connect to a Wi-Fi signal with a better signal quality, and improving interaction capability between a user and a terminal.

Referring to Fig. 5, the acquisition unit 41 includes an acquisition module 411 and a first processing module 412.

The acquisition module 411 is configured to acquire a first parameter of each of signals that are connectable to the terminal.

The first processing module 412 is configured to obtain a quality parameter value of each of the signals according to the first parameter of each of the signals.

Optionally, the first processing module 412 is configured to perform the following steps: setting a weight coefficient for the first parameter of each of the signals; and performing weighted calculation on the first parameter of each of the signals based on the weight coefficient for the first parameter to obtain the quality parameter value of each of the signals.

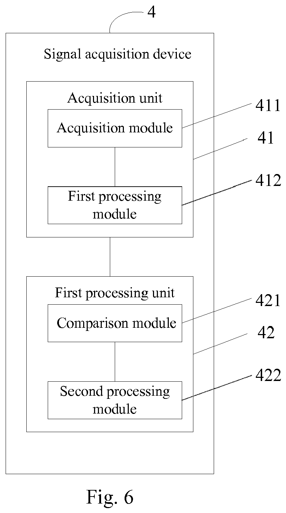

Referring to Fig. 6, the first processing unit 42 further includes a comparison module 421 and a second processing module 422.

The comparison module 421 is configured to compare the quality parameter value of each of the signals with one another.

The second processing module 422 is configured to acquire a signal having a highest quality parameter value among the quality parameter values of signals, and set the signal having the highest quality parameter value as a target signal.

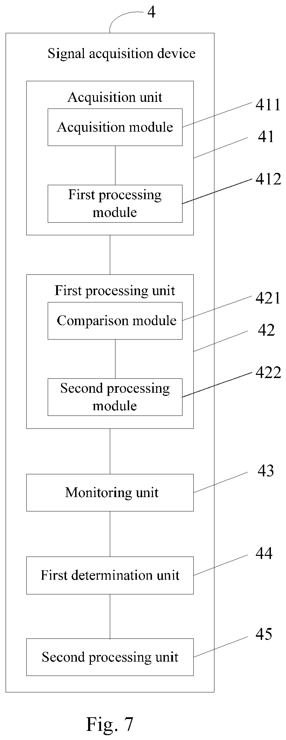

Referring to Fig. 7, the device further includes a monitoring unit 43, a first determination unit 44 and a second processing unit 45.

The monitoring unit 43 is configured to monitor a quality parameter value of a currently connected signal of the terminal.

The first determination unit 44 is configured to determine, if a variation in the quality parameter value of the currently connected signal within a first preset time period is greater than a first threshold and a duration in the first preset time period, during which the quality parameter value is a second threshold, is greater than a second preset time period, whether a current quality parameter value of the currently connected signal of the terminal is zero.

The second processing unit 45 is configured to acquire, if the current quality parameter value of the currently connected signal of the terminal is zero, a signal having the highest quality parameter value among all signals that are connectable to the terminal except the currently connected signal, and set the signal having the highest quality parameter value among all signals that are connectable to the terminal except the currently connected signal as a target signal.

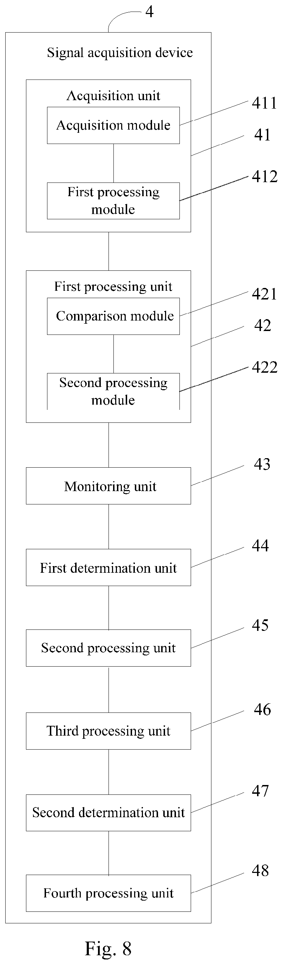

Further, referring to Fig. 8, the device further includes a third processing unit 46, a second determination unit 47 and a fourth processing unit 48.

The third processing unit 46 is configured to acquire, if the current quality parameter value of the currently connected signal of the terminal is not zero, an average download speed of the terminal over a third preset time period, and sum up time periods within the third preset time period, during each of which the download speed of the terminal is greater than a first preset speed, to obtain a total time period.

The second determination unit 47 is configured to determine whether the average download speed is greater than a second preset download speed and whether a ratio of the total time period and the third preset time period is greater than a preset ratio.

The fourth processing unit 48 is configured to acquire, if the average download speed is smaller than or equal to the second preset download speed and the ratio of the statistical time period and the third preset time period is smaller than or equal to the preset ratio, a signal having the highest quality parameter value among all signals that are connectable to the terminal when the first preset time period starts, and set, when the first preset time period starts, the signal having the highest quality parameter value among all signals that are connectable to the terminal as the target signal.

It is to be noted that, as for interaction processes between units and modules in this embodiment, one may refer to interaction processes in one of the signal acquisition methods provided by embodiments corresponding to Figs 1-3, which are not repeated herein.

The signal acquisition device according to the embodiments of the present disclosure can acquire a quality parameter value of a signal that is connectable to a terminal, and then analyze the quality parameter value of the signal that is connectable to the terminal and determine a target signal that is to be connected by the terminal. As such, based on relationships between quality parameter values of connectable Wi-Fi signals, the terminal can directly select and connect to a Wi-Fi signal having a better quality parameter value among the Wi-Fi signals when the terminal needs to connect to a Wi-Fi signal, thereby solving the problem in some cases that a terminal cannot automatically select a signal for connection according to signal qualities, enabling a terminal to automatically select and connect to a Wi-Fi signal with a better signal quality, and improving interaction capability between a user and a terminal. Further, when quality of the Wi-Fi signal already connected to the terminal changes, the terminal can switch to a Wi-Fi signal with a better signal quality, thereby ensuring user's online experience.

In practical applications, each of the acquisition unit 41, the first processing unit 42, the monitoring unit 43, the first determination unit 44, the second processing unit 45, the third processing unit 46, the second determination unit 47, the fourth processing unit 48, the acquisition module 411, the first processing module 412, the comparison module 421, and the second processing module 422 may be implemented by a central processing unit (CPU), a micro processor unit (MPU), a digital signal processor (DSP) or a field programmable gate array (FPGA) and the like in a wireless data transmission apparatus.

It should be known to one skilled in the art that an embodiment of the present disclosure may be provided as a method, a system, or a computer program product. Thus, the present disclosure may employ a form of a hardware embodiment, a software embodiment, or an embodiment combining aspects of software and hardware. Also, the present disclosure may employ a form of a computer program product embodied on one or more computer readable storage medium (including but not limited to magnetic disc memory and optical memory and so on) containing therein computer executable program codes.

The present disclosure is described referring to flow diagrams and/or block diagrams of methods, devices (systems), and computer program products according to embodiments of the present disclosure. It should be understood that each process and/or block of the flow charts and/or block diagrams and combinations of processes and/or blocks of the flow charts and/or block diagrams may be implemented by computer program instructions. These computer program instructions may be provided to a general-purpose computer, a special-purpose computer, an embedded processor or a processor of other programmable data processing apparatus to produce a machine, so that instructions executed by a processor of a computer or other programmable data processing apparatus produce an apparatus for realizing functions specified in one or more processes of flow charts and/or one or more blocks of block diagrams.

These computer program instructions may also be stored in a computer readable memory capable of causing a computer or other programmable data processing apparatus to operate in a particular manner, so that instructions stored in the computer readable memory produce a product including an instruction device for implementing functions specified in one or more processes of flow charts and/or one or more blocks of block diagrams.

These computer program instructions may also be loaded onto a computer or other programmable data processing apparatus, such that a series of operation steps are executed on the computer or other programmable data processing apparatus to generate computer implemented processes, so that instructions executed on the computer or other programmable data processing apparatus provide steps for realizing functions specified in one or more processes of flow charts and/or one or more blocks of block diagrams.

The above description is merely about exemplary embodiments of the present disclosure, and is not to limit a protection scope of the present disclosure.

### Industrial Applicability

The present disclosure is applicable to the communication field, and serves to solve the problem in some cases that a terminal cannot automatically select a signal for connection according to signal qualities, thereby enabling a terminal to automatically select and connect to a Wi-Fi signal with a better signal quality, and improving interaction capability between a user and a terminal.

## Claims

1. A signal acquisition method, comprising:
acquiring a quality parameter value of a signal that is connectable to a terminal; and
analyzing the quality parameter value of the signal that is connectable to the terminal and determining a target signal that is to be connected by the terminal.

2. The method according to claim 1, wherein the acquiring the quality parameter value of the signal that is connectable to the terminal comprises:
acquiring a first parameter of each of signals that are connectable to the terminal, wherein the first parameter comprises at least one of: a reception power, a response time, and a transmission rate; and
obtaining a quality parameter value of each of the signals according to the first parameter of each of the signals.

3. The method according to claim 2, wherein the obtaining the quality parameter value of each of the signals according to the first parameter of each of the signals comprises:
setting a weight coefficient for the first parameter of each of the signals; and
performing weighted calculation on the first parameter of each of the signals based on the weight coefficient for the first parameter to obtain the quality parameter value of each of the signals.

4. The method according to claim 1, wherein the analyzing the quality parameter value of the signal that is connectable to the terminal and determining the target signal that is to be connected by the terminal comprises:
comparing the quality parameter value of each of the signals with one another; and
acquiring a signal having a highest quality parameter value among quality parameter values of the signals, and setting the signal having the highest quality parameter value as the target signal.

5. The method according to any one of claims 1-4, further comprising:
monitoring a quality parameter value of a currently connected signal of the terminal;
determining, in response to a variation in the quality parameter value of the currently connected signal within a first preset time period being greater than a first threshold and a duration in the first preset time period being greater than a second preset time period, whether a current quality parameter value of the currently connected signal of the terminal is zero, wherein the quality parameter value is a second threshold during the duration; and
acquiring, in response to the current quality parameter value of the currently connected signal of the terminal is zero, a signal having a highest quality parameter value among all signals that are connectable to the terminal except the currently connected signal, and setting the signal having the highest quality parameter value among all signals that are connectable to the terminal except the currently connected signal as the target signal.

6. The method according to claim 5, further comprising:
acquiring, in response to the current quality parameter value of the currently connected signal of the terminal being not zero, an average download speed of the terminal over a third preset time period, and summing up time periods within the third preset time period to obtain a total time period, wherein a download speed of the terminal is greater than a first preset speed during each of the time periods;
determining whether the average download speed is greater than a second preset download speed and whether a ratio of the total time period and the third preset time period is greater than a preset ratio; and
acquiring, in response to the average download speed being smaller than or equal to the second preset download speed and the ratio of the total time period and the third preset time period being smaller than or equal to the preset ratio, a signal having a highest quality parameter value among all signals that are connectable to the terminal when the first preset time period starts, and setting, when the first preset time period starts, the signal having the highest quality parameter value among all signals that are connectable to the terminal as the target signal.

7. A signal acquisition device, comprising an acquisition unit and a first processing unit, wherein
the acquisition unit is configured to acquire a quality parameter value of a signal that is connectable to a terminal; and
the first processing unit is configured to analyze the quality parameter value of the signal that is connectable to the terminal and determine a target signal that is to be connected by the terminal.

8. The device according to claim 7, wherein the acquisition unit comprises an acquisition module and a first processing module, wherein
the acquisition module is configured to acquire a first parameter of each of signals that are connectable to the terminal, wherein the first parameter comprises at least one of: a reception power, a response time, and a transmission rate; and
the first processing module is configured to obtain a quality parameter value of each of the signals according to the first parameter of each of the signals.

9. The device according to claim 8, wherein the first processing module is configured to:
set a weight coefficient for the first parameter of each of the signals; and
perform weighted calculation on the first parameter of each of the signals based on the weight coefficient for the first parameter to obtain the quality parameter value of each of the signals.

10. The device according to claim 7, wherein the first processing unit comprises a comparison module and a second processing module, wherein
the comparison module is configured to compare quality parameter value of each of the signals with one another; and
the second processing module is configured to acquire a signal having a highest quality parameter value among quality parameter values of the signals, and set the signal having the highest quality parameter value as the target signal.

11. The device according to any one of claims 7-10, further comprising a monitoring unit, a first determination unit and a second processing unit, wherein
the monitoring unit is configured to monitor a quality parameter value of a currently connected signal of the terminal;
the first determination unit is configured to determine, in response to a variation in the quality parameter value of the currently connected signal within a first preset time period being greater than a first threshold and a duration in the first preset time period being greater than a second preset time period, whether a current quality parameter value of the currently connected signal of the terminal is zero, wherein the quality parameter value is a second threshold during the duration; and
the second processing unit is configured to acquire, in response to the current quality parameter value of the currently connected signal of the terminal being zero, a signal having a highest quality parameter value among all signals that are connectable to the terminal except the currently connected signal, and set the signal having the highest quality parameter value among all signals that are connectable to the terminal except the currently connected signal as the target signal.

12. The device according to claim 11, further comprising a third processing unit, a second determination unit and a fourth processing unit, wherein
the third processing unit is configured to acquire, in response to the current quality parameter value of the currently connected signal of the terminal being not zero, an average download speed of the terminal over a third preset time period, and sum up time periods within the third preset time period to obtain a total time period, wherein a download speed of the terminal is greater than a first preset speed during each of the time periods;
the second determination unit is configured to determine whether the average download speed is greater than a second preset download speed and whether a ratio of the total time period and the third preset time period is greater than a preset ratio; and
the fourth processing unit is configured to acquire, in response to the average download speed being smaller than or equal to the second preset download speed and the ratio of the total time period and the third preset time period being smaller than or equal to the preset ratio, a signal having a highest quality parameter value among all signals that are connectable to the terminal when the first preset time period starts, and set, when the first preset time period starts, the signal having the highest quality parameter value among all signals that are connectable to the terminal as the target signal.

13. A computer storage medium storing thereon instructions for execution, wherein the instructions for execution are configured to perform the method according to any one of claims 1-6.
